# FASCICULE DE BREVET EUROPEEN

(11) **EP 2 857 821 B1**
(45) Date de publication et mention de la délivrance du brevet: **08.08.2018**
(21) Numéro de dépôt: 14187292.9
(22) Date de dépôt: 01.10.2014
(51) Int. Cl.: G01M 17/04

(54) **Dispositif d'essais pour véhicule à moteur**
Prüfvorrichtung für Kraftfahrzeuge
Test device for a motor vehicle

(30) Priorité: 01.10.2013 FR 1359475
(43) Date de publication de la demande: 08.04.2015
(73) Titulaire: V-Motech, 91160 Longjumeau (FR)
(72) Inventeur: Bion, Nicolas, 78390 Bois D'arcy (FR); Olevier, Sébastien, 91530 Saint Maurice Montcouronne (FR); Olevier, Stéphane, 91530 Saint Maurice Montcouronne (FR)
(74) Mandataire: IPAZ

(56) Documents cités:
- EP-A2- 1 484 593
- DE-A1- 10 029 313
- DE-A1-102007 012 545
- US-A- 5 148 703
- US-A- 5 574 226

## Description

### Domaine technique

La présente invention concerne un dispositif d'essais mobile comprenant un banc à rouleaux.

Ce type de dispositif d'essais peut être mis en oeuvre dans le cadre d'essais de fonctionnement de véhicules à moteur notamment de voitures automobiles.

### Etat de la technique antérieure

On connaît différents types de dispositif d'essais comprenant typiquement un banc à rouleaux visant à tester le fonctionnement d'un véhicule automobile. Le véhicule est alors placé sur le dispositif et le plus souvent, par mesure de sécurité, attaché à ce dispositif.

Dans le cas des dispositifs comprenant un banc à rouleaux, les rouleaux sont logés dans une fosse et servent à simuler le roulage sur le sol. Généralement, le véhicule essayé est placé sur le banc à rouleaux, les roues motrices dudit véhicule placées sur les rouleaux. La périphérie de ces rouleaux sert alors de zone de contact avec les pneus du véhicule lors d'essais dynamiques de roulage. Pour chaque roue motrice du véhicule, on peut utiliser un rouleau ou deux rouleaux parallèles situés l'un derrière l'autre. L'utilisation de deux rouleaux parallèles a pour principal avantage une meilleure stabilité du fait que la bande de roulement du pneu du véhicule essayé peut prendre appui sur les deux bandes de roulement des rouleaux. L'utilisation d'un seul rouleau a pour principal avantage de simuler un contact pneu/sol plus réaliste qu'avec deux rouleaux parallèles.

Les rouleaux ont pour fonction d'exercer sur la bande de roulement une force tangentielle qui simule ce que serait à chaque instant la force de réaction de la chaussée dans les conditions de fonctionnement faisant l'objet des essais. Les rouleaux ont un moment d'inertie qui correspond à une certaine masse du véhicule. Lorsque le moteur d'un véhicule ayant une telle masse en cours d'essais est commandé pour accélérer la vitesse de rotation de ses roues motrices, les rouleaux opposent à cette accélération un couple de réaction tel que l'accélération des roues est la même qu'en conditions de route réelles. En outre les rouleaux sont accouplés à un frein à courants de Foucault qui simule la résistance à l'avancement à vitesse constante et l'excédent éventuel de masse du véhicule par rapport à celle simulée par le moment d'inertie des rouleaux lors de l'accélération du véhicule, ainsi qu'un éventuel déficit de masse du véhicule lors du freinage. Les rouleaux sont en outre accouplés à une machine électrique qui simule l'excédent éventuel de masse du véhicule lors du freinage et l'éventuel déficit de masse du véhicule lors de l'accélération. Le fonctionnement de cet ensemble pour simuler avec les rouleaux différentes configurations de route et différents cas de fonctionnement du moteur du véhicule essayé est peu satisfaisant car le frein à courants de Foucault présente un temps de réponse à toutes les commandes qui lui sont appliquées. Le document DE 100 29 313 A1 divulgue un banc d'essais comprenant un dispositif d'entraînement et de freinage afin de d'entraîner ou de ralentir des rouleaux, pour tester chaque roue d'un véhicule de type poids lourd, et dans lequel il est prévu un dispositif de freinage supplémentaire relié à l'ensemble des rouleaux pour ralentir davantage le dispositif d'entraînement et de freinage. Par ailleurs, les dispositifs connus permettent très difficilement de procéder à des essais sur un véhicule très léger et en particulier sur un deux-roues.

De plus selon l'état de la technique, les rouleaux et les moyens dynamiques composés de la machine électrique et du frein à courants de Foucault sont logés dans une fosse et assemblés de manière coaxiale les uns aux autres, formant un ensemble encombrant d'une longueur d'environ 4 mètres.

En outre ces dispositifs d'essais se trouvent généralement chez des prestataires dont la situation géographique n'est pas toujours favorable. Il se pose aussi le problème de la confidentialité du projet de véhicule lorsque celui-ci est soumis à des essais chez le prestataire, bien que le dispositif soit généralement situé dans un local fermé. Le document US 5 574 226 A divulgue un dispositif d'essais fermé transportable par une remorque, et comprenant une cellule de test de vibration, grincement, bruits (ferrailles, parasites) et peut soumettre le véhicule testé à différentes températures et aux ultraviolets.

Un autre problème est que les dispositifs connus ne permettent généralement pas de simuler les conditions altimétriques ou climatiques qui seront rencontrées lors de l'utilisation réelle du véhicule.

Le but de la présente invention est de proposer un dispositif d'essais remédiant en tout ou partie aux problèmes précédents.

Un autre but de la présente invention est de proposer un dispositif d'essais plus accessible.

Encore un autre but de la présente invention est de proposer un dispositif d'essais offrant de meilleures conditions de confidentialité.

Un but supplémentaire de la présente invention est de proposer un dispositif d'essais plus compact.

Encore un autre but de la présente invention est de proposer un dispositif d'essais permettant une meilleure simulation des conditions de route réelles.

Enfin, un autre but de la présente invention est de proposer un dispositif d'essais permettant de simuler des conditions climatiques et/ou altimétriques.

### Exposé de l'invention

Selon un premier aspect de l'invention, le dispositif d'essais fermé pour véhicule à moteur, comprenant une surface porteuse pour le véhicule et un banc d'essais comprenant des moyens configurés pour tester le véhicule, est caractérisé en ce que le dispositif comprend un châssis routier, monté sur roues, et supportant le banc d'essais ainsi qu'un plancher définissant la surface porteuse, et une carrosserie portée par le châssis routier pour conférer au dispositif d'essais son caractère fermé. Par châssis routier, on désigne un châssis de véhicule (camion ou remorque) poids lourd. Le dispositif selon l'invention permet de proposer un nouveau service aux clients en leur amenant le banc d'essais au sein de leurs locaux ou à proximité de ceux-ci. Les clients peuvent ainsi maîtriser leur confidentialité et gagner du temps de transport et de main d'oeuvre. De plus, comme l'implantation d'un dispositif d'essais fixe est relativement coûteuse, les clients peuvent aussi maîtriser leurs coûts liés à ce type d'essais.

Le dispositif fermé selon l'invention permet d'effectuer des essais à l'abri des intempéries et des regards indiscrets même s'il est installé en-dehors d'un local. Il est facile de faire en sorte que seules les personnes habilitées puissent assister aux essais. Par ailleurs, le dispositif peut être transporté en tout lieu choisi pour ses conditions climatiques ou altimétriques.

De préférence, le banc d'essais comporte un banc à rouleaux comprenant au moins un premier rouleau rotatif sur lui-même, en liaison pivot avec le châssis, agencé pour que sa périphérie soit en contact d'adhérence avec le pourtour d'au moins une roue motrice du véhicule. Par rouleau, on désigne de préférence un rouleau inertiel. Le banc à rouleaux comporte des moyens dynamiques agencés pour transmettre à l'au moins un premier rouleau un couple simulant au moins en partie la réaction de la route suivant différentes configurations de route et différents cas de fonctionnement du moteur du véhicule essayé.

On appellera ci-après « dispositif d'essais spécifié » un dispositif d'essais comprenant un banc à rouleaux comprenant :
- au moins un premier rouleau rotatif sur lui-même, agencé pour que sa périphérie soit en contact d'adhérence avec le pourtour d'au moins une roue motrice du véhicule, et
- des moyens dynamiques agencés pour transmettre à l'au moins un premier rouleau un couple simulant au moins en partie la réaction de la route pour le véhicule essayé.

L'au moins un premier rouleau est de préférence inertiel.

Selon un second aspect de l'invention, dans un dispositif d'essais spécifié qui peut être conforme au premier aspect, les moyens dynamiques comprennent une machine électrique, apte à fonctionner sélectivement en mode générateur et en mode moteur, comprenant typiquement un arbre de puissance rotatif pouvant être couplé en rotation directement ou indirectement avec le premier rouleau.

Avantageusement, les moyens dynamiques comprennent une machine de charge notamment un frein à courants de Foucault comprenant typiquement un arbre rotatif par rapport au châssis. Cet arbre rotatif de freinage peut être couplé en rotation directement ou indirectement avec le premier rouleau. Par machine de charge, on désigne une machine capable de produire un couple résistant réglable tendant à s'opposer à la rotation de l'au moins un premier rouleau.

Selon un troisième aspect de l'invention, dans un dispositif d'essais spécifié pouvant être conforme à l'un au moins des aspects précédents, une partie au moins des moyens dynamiques n'est pas coaxiale avec l'au moins un premier rouleau, et il est prévu des moyens de transmission entre les moyens dynamiques et le premier rouleau.

Ces dispositions, permettent de réduire la dimension axiale du dispositif d'essais spécifié. Si le dispositif d'essais est conforme au premier aspect il devient possible de le loger dans la largeur du châssis routier sans que celle-ci excède la dimension ordinaire (en général 2,5 mètres).

Selon un autre mode préféré de réalisation, la machine électrique et la machine de charge, notamment le frein à courants de Foucault, sont coaxiaux entre eux selon un axe différent de celui du premier rouleau et reliés à ce dernier par des moyens de transmission communs.

De préférence, dans une réalisation combinant le premier et le troisième aspect, les moyens dynamiques reliés à l'au moins un premier rouleau par des moyens de transmission sont disposés pour avoir au plus sensiblement la même emprise transversale que l'emplacement prévu pour le véhicule dans la largeur du châssis routier.

Typiquement, l'axe de l'au moins un premier rouleau est parallèle à l'axe commun des moyens dynamiques. L'arbre de puissance de la machine électrique est alors relié à l'arbre rotatif de freinage de la machine de charge. Ces moyens de transmission peuvent être par exemple des chaînes, des courroies, notamment crantées, des engrenages ou d'autres systèmes de transmission de puissance connus de l'homme du métier.

De façon avantageuse ces moyens de transmission peuvent se placer, du point de vue des moyens dynamiques, entre la machine électrique et la machine de charge, notamment le frein à courants de Foucault. Par cette réalisation avantageuse, les moyens dynamiques peuvent avoir ensemble sensiblement la même emprise transversale que les rouleaux, cette emprise s'inscrivant dans la largeur du châssis routier lorsque le dispositif d'essais du type spécifié est conforme au premier aspect.

D'une façon générale dans un dispositif d'essais spécifié, pouvant être conforme à un ou plusieurs des aspects précédents, il est avantageux que l'emprise transversale des moyens dynamiques s'inscrive sensiblement dans la largeur de l'emplacement prévu pour le véhicule, ou encore, le cas échéant, lorsque le dispositif est monté sur un châssis routier, dans la largeur réglementaire (en général 2,5 mètres) d'un châssis routier autorisé à circuler en tant que véhicule ordinaire. Selon l'invention, dans un dispositif d'essais spécifié, en particulier mais non limitativement conforme à l'un des aspects précédents, des moyens de commande utilisés pour faire fonctionner les moyens dynamiques peuvent être actionnés pour faire fonctionner simultanément la machine de charge, notamment le frein à courants de Foucault, avec la machine électrique en mode générateur ou en mode moteur.

Avantageusement, ces moyens de commande font fonctionner la machine électrique pour compenser les temps de réponse et/ou le manque de précision de la machine de charge, notamment le frein à courants de Foucault. Ils peuvent par exemple faire fonctionner la machine électrique en moteur, en particulier pour simuler la réaction de la route lors d'un freinage du véhicule, et aussi pour compenser le manque de rapidité et de précision de la machine de charge, notamment le frein à courants de Foucault, notamment lorsqu'elle doit réduire ou cesser de faire croître, ou faire croître moins vite, son couple de freinage.

De préférence, la machine électrique peut fonctionner en générateur simultanément avec la machine de charge, notamment le frein à courants de Foucault, afin d'ajuster le couple exercé sur l'au moins un premier rouleau simulant la réaction de la route et/ou l'inertie des rouleaux suivant la masse du véhicule. Par exemple, lorsque la machine de charge doit augmenter son couple de freinage, la machine électrique en générateur peut compléter ce couple pendant le temps de réponse de la machine de charge.

Ces dispositions, de préférence combinées, permettent de simuler la réaction de la route suivant différentes configurations (par exemple montée, descente, etc..) et différents cas de fonctionnement (par exemple vitesse constante, accélération, etc...) et suivant la masse du véhicule essayé.

Avantageusement, des moyens de raccordement sont prévus pour fournir à un réseau électrique extérieur et/ou à un réseau électrique du dispositif d'essais, l'électricité produite par la machine électrique fonctionnant en générateur.

Selon un cinquième aspect de l'invention, dans un dispositif d'essais spécifié, en particulier conforme à un ou à plusieurs des aspects précédents, le banc à rouleaux comporte un deuxième rouleau rotatif sur lui-même, agencé pour que sa périphérie soit en contact d'adhérence avec le pourtour d'au moins une roue motrice du véhicule. De plus, le banc à rouleaux comporte des moyens d'accouplement amovible configurés pour accoupler de manière amovible le deuxième rouleau au premier rouleau. Typiquement, ce mode de réalisation permet de tester une voiture automobile lorsque les deux rouleaux sont accouplés, et de désaccoupler le deuxième rouleau pour tester par exemple une moto dont on place la roue motrice en contact d'adhérence avec le premier rouleau.

Selon un mode préféré de l'invention, ces deux rouleaux, l'au moins un premier rouleau et le deuxième rouleau sont dimensionnés pour représenter ensemble l'inertie d'un véhicule ayant une masse de par exemple environ 1200 kg.

Selon un mode de réalisation avantageux, le premier rouleau et le deuxième rouleau ont des moments d'inertie différents. Par exemple, l'un des rouleaux peut présenter un moment d'inertie plus grand, en particulier une longueur plus grande que l'autre.

De préférence, selon ce quatrième aspect, les moyens dynamiques sont accouplés au premier rouleau sans que le deuxième rouleau soit un moyen de transmission entre les moyens dynamiques et le premier rouleau. Les moyens dynamiques peuvent être accouplés en rotation directement ou indirectement au premier rouleau. Le deuxième rouleau lorsqu'il est en service, reçoit une partie du couple des moyens dynamiques via l'accouplement entre les deux rouleaux. Ceci est particulièrement bien réalisable lorsque le dispositif d'essais spécifié est conforme au deuxième aspect, en particulier lorsque les moyens de transmission entraînent le premier rouleau via un arbre dont une extrémité est solidaire du premier rouleau et l'autre extrémité correspond à l'accouplement amovible avec le deuxième rouleau.

Dans le cas du premier aspect, combiné si désiré avec un ou plusieurs des aspects suivants, il est avantageux que chaque rouleau présente une surface de roulement ayant un diamètre compris entre 40 centimètres et 100 centimètres, de préférence 50 centimètres environ. Ceci permet de prévoir un plancher relativement bas dans le véhicule, par comparaison avec les rouleaux de 120 centimètres usuels pour les dispositifs d'essais fixes connus.

Selon un sixième aspect de l'invention, dans un dispositif d'essais spécifié, en particulier conforme à un ou à plusieurs des aspects précédents, le banc d'essais comprend un système d'extraction des gaz d'échappement. Dans le cadre des essais de fonctionnement de véhicules à moteur à combustion interne, des gaz d'échappement sont évacués de ces véhicules si bien qu'ils peuvent d'une part incommoder ou même intoxiquer le ou les opérateurs et d'autre part polluer l'air intérieur du banc d'essais ; air que consomme le moteur du véhicule essayé et donc fausser les résultats des essais par une mauvaise combustion du moteur du véhicule essayé. Aussi le banc d'essais comprend un système d'extraction des gaz d'échappement dont l'admission est reliée à la fois au système d'échappement du véhicule et à l'air extérieur. En mélangeant ainsi les gaz d'échappement avec l'air extérieur, on refroidit et uniformise le débit du gaz aspiré par l'extracteur, en évitant de générer une dépression variable à la sortie du moteur, ce qui fausserait les essais.

Selon un septième aspect de l'invention, dans un dispositif d'essais spécifié, en particulier conforme à un ou à plusieurs des aspects précédents, l'environnement intérieur du banc d'essais peut être modulé par un système climatique qui permet de simuler diverses conditions climatiques à l'intérieur du dispositif d'essais.

De préférence, le dispositif d'essais est isolé thermiquement et le système climatique comporte par exemple des éléments tels qu'un groupe d'eau glacée, une centrale de traitement d'air, un climatiseur, pompe à chaleur avec condenseur, compresseur, évaporateur.

Avantageusement un ventilateur d'air, simulant l'écoulement d'air auquel est exposé un véhicule en ordre de marche, est placé à l'intérieur du banc d'essais, devant la face avant du véhicule essayé afin de souffler de l'air en direction du véhicule et de refroidir et d'alimenter en air le moteur du véhicule essayé. Le débit d'air est automatiquement ajusté en fonction de la vitesse de rotation des rouleaux, avec éventuellement la possibilité d'ajouter ou de retrancher du débit d'air pour simuler l'effet du vent venant de l'avant ou de l'arrière du véhicule.

Enfin le dispositif d'essais comprend une zone de pilotage permettant à le ou les opérateurs de procéder aux essais.

En combinaison avec le premier aspect et le cas échéant un ou plusieurs des aspects suivants, il est possible d'agrandir le volume intérieur et d'augmenter la superficie du plancher de la surface porteuse du dispositif d'essais pour disposer de davantage d'espace autour du véhicule. A cette fin, il est prévu que la carrosserie et le plancher soient extensibles en largeur par au moins un tiroir coulissant. De façon avantageuse, on peut prévoir deux tiroirs coulissant respectivement de chaque côté de la carrosserie du dispositif d'essais.

Ces particularités confèrent à l'invention plusieurs avantages : il est possible de tester un véhicule à moteur dans les mêmes conditions que celles connues avec un dispositif traditionnel fixe. Le dispositif d'essais permet aux clients de préserver la confidentialité de leurs projets tout en économisant le coût d'une installation d'un dispositif d'essais fixe et du temps de transport. Par rapport au dispositif d'essais, la disposition particulière des différents éléments, rouleaux et moyens dynamiques entre eux permet de pouvoir utiliser un châssis routier aux dimensions standard. De plus le choix des dimensions des rouleaux associé avec une intégration judicieuse du banc à rouleaux au sein du châssis routier, c'est-à-dire de manière préférentielle devant les roues porteuses du châssis routier et affleurant au-dessus du plancher de la surface porteuse du châssis routier, permet de faire rentrer dans le dispositif d'essais tous les véhicules à moteur de taille standard comme notamment les véhicules dits « véhicules particuliers ». De plus concernant l'asservissement des moyens dynamiques, le fait de faire fonctionner simultanément la machine électrique et la machine de charge, notamment le frein à courants de Foucault, permet non seulement d'ajuster, de manière rapide et précise, le couple exercé sur les rouleaux simulant la réaction de la route suivant différentes configurations (par exemple montée, descente, etc..) et différents cas de fonctionnement (par exemple vitesse constante, accélération, etc...) et suivant la masse du véhicule essayé.

### Description des figures et modes de réalisation

D'autres particularités et avantages de l'invention apparaîtront à la lecture de la description détaillée de mises en oeuvre et de modes de réalisation nullement limitatifs, et des dessins annexés où :
- la figure 1 présente un éclaté du dispositif d'essais 1 incomplet selon une forme préférée de réalisation,
- les figures 2a et 2b présentent respectivement une vue de côté et une vue de dessus du dispositif d'essais 1,
- la figure 3 présente un schéma de principe de l'association des moyens dynamiques 4 avec les rouleaux R1 et R2 du banc à rouleaux 3 selon un mode de réalisation préféré de l'invention,

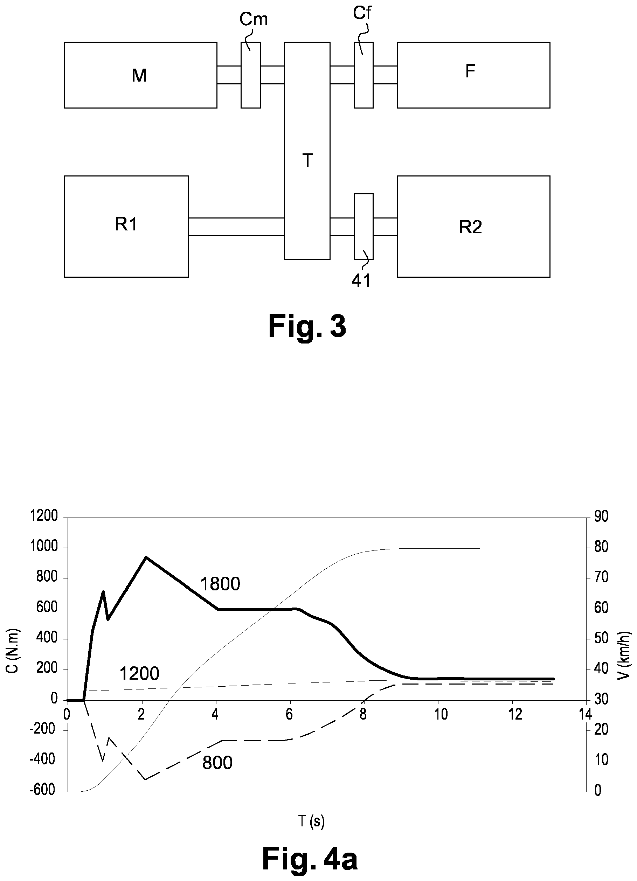

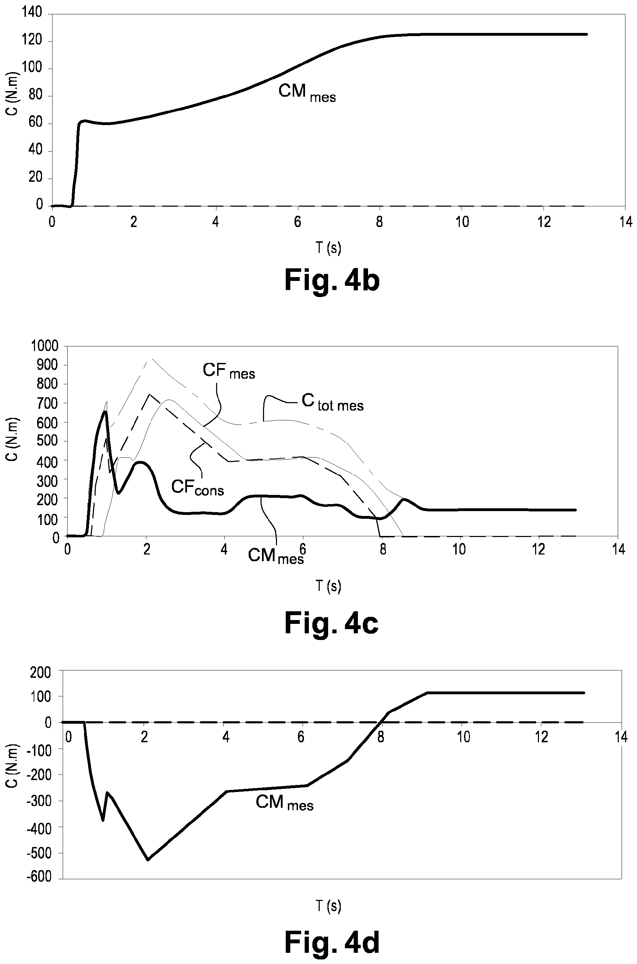

- les figures 4a, 4b, 4c et 4d présentent des courbes illustrant le fonctionnement de la machine électrique M et du frein à courants de Foucault F lors de la simulation d'une phase d'accélération selon trois différents cas ; la figure 4a illustre les courbes de consigne de couple globale à appliquer aux rouleaux R1 et R2 dans les trois cas ; la figure 4b présente les courbes illustrant le fonctionnement de la machine électrique M et du frein à courants de Foucault F en phase d'accélération pour un véhicule 80 essayé dont la masse est de 1200 kg alors que la figure 4c couvre le cas d'un véhicule 80 essayé de 1800 kg et la figure 4d couvre le cas d'un véhicule 80 essayé de 800 kg.

Ces modes de réalisation n'étant nullement limitatifs, on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur.

Le dispositif d'essais fermé 1 pour véhicule automobile à moteur 80 comprend une surface porteuse pour le véhicule 80 et un banc d'essais 2 comprenant des moyens configurés pour tester le véhicule 80. Suivant l'invention le dispositif 1 comprend un châssis routier 10, monté sur roues 11, et supportant le banc d'essais 2 ainsi qu'un plancher 9 définissant la surface porteuse, et une carrosserie 100 portée par le châssis routier 10 pour conférer au dispositif d'essais 1 son caractère fermé.

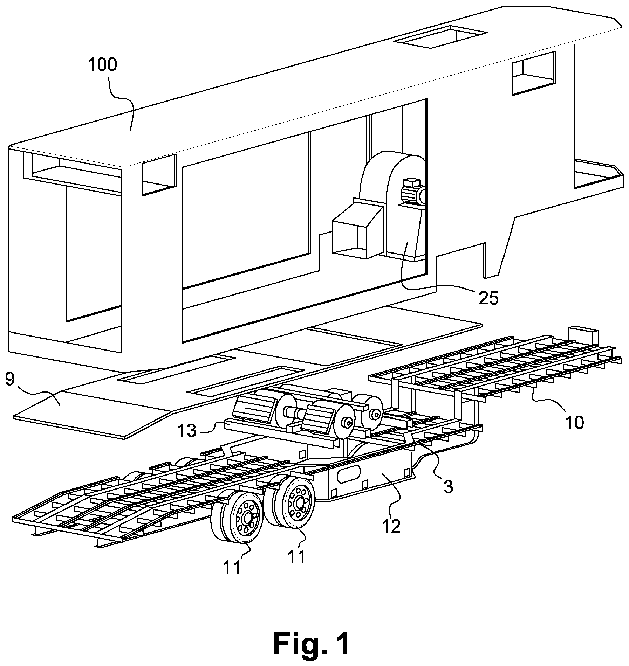

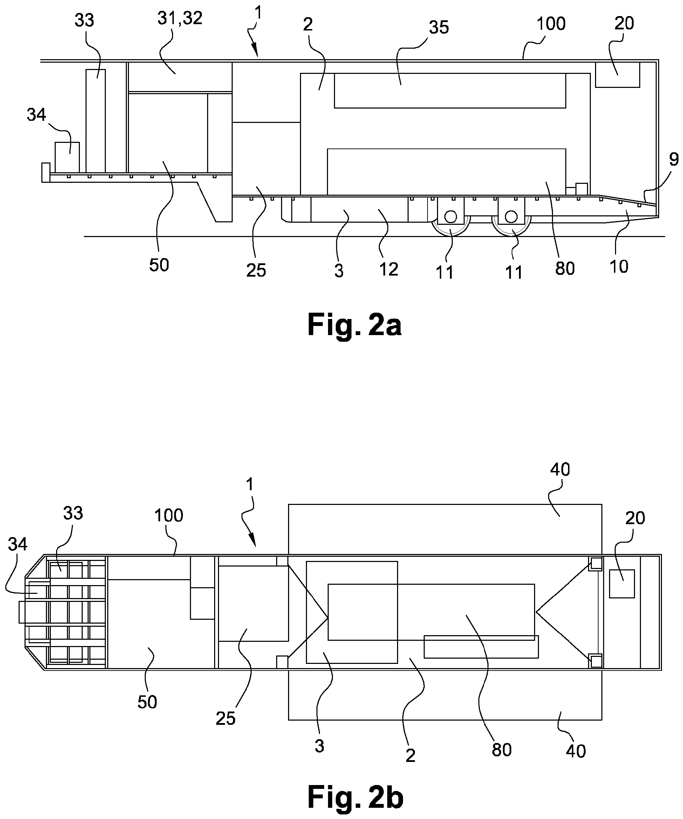

Dans le mode de réalisation représenté aux figures 1 et 2, le dispositif se présente sous la forme d'une semi-remorque routière aux dimensions standard de longueur, largeur, hauteur et poids. Le châssis routier 10 est alors le châssis de la semi-remorque en question. La figure 1 présente par un éclaté et de manière non exhaustive le dispositif d'essais 1. Dans une région décalée longitudinalement par rapport aux roues 11 du châssis routier 10, le châssis routier 10 est ajouré pour recevoir un caisson 12 recevant le banc à rouleaux 3. Le banc à rouleaux 3 comprend un cadre 13 qui est fixé au châssis 10. Le banc à rouleaux 3 comprend en outre un premier rouleau R1 et un deuxième rouleau R2 rotatifs sur eux-mêmes selon un axe horizontal et transversal relativement au châssis 10, en liaison pivot avec le châssis 10, agencés pour que leur périphérie puisse être en contact d'adhérence avec le pourtour d'une roue motrice du véhicule 80. Le banc à rouleaux 3 comprend également des moyens dynamiques 4 agencés pour transmettre aux rouleaux R1, R2 un couple simulant au moins en partie la réaction de la route pour le véhicule 80 essayé. Au-dessus du châssis routier 10 se trouve un plancher 9 définissant la surface porteuse du véhicule 80 essayé et formant une piste d'accès depuis une porte arrière de la semi-remorque jusqu'à l'emplacement prévu pour les essais. Le plancher 9 est ajouré afin de laisser les rouleaux R1, R2 affleurer un peu au-dessus du plancher 9 permettant à une ou deux roues motrices du véhicule 80 essayé de se placer sur le ou les deux rouleaux R1, R2. Enfin une carrosserie 100 est portée par le châssis routier 10 pour conférer au dispositif d'essais 1 son caractère fermé. Il est à noter que la figure 1 présente la carrosserie 100 sans ses ouvrants et que les autres moyens configurés pour tester le véhicule 80 essayé ne sont pas représentés en-dehors du ventilateur 25 que l'on devine à l'intérieur du dispositif d'essais 1, à l'avant de la zone destinée à être occupée par le véhicule à tester.

Les figures 2a et 2b permettent de visualiser schématiquement l'agencement des différents moyens configurés pour tester le véhicule 80 à l'intérieur du dispositif d'essais 1. La figure 2a présente une vue de côté du dispositif d'essais 1. La figure 2b présente une vue de dessus du dispositif d'essais 1. Comme pour la figure 1, on retrouve le châssis routier 10 supportant le banc à rouleaux 3, la surface porteuse et la carrosserie 100. A l'intérieur du dispositif, le véhicule 80 essayé est représenté schématiquement par un rectangle. La mise en place du véhicule 80 essayé est possible en passant par la porte d'accès de la partie arrière du dispositif d'essais 1 et à l'aide de rampes non représentées sur les figures. La mise en place se termine une fois que le véhicule 80 essayé est placé au-dessus du banc à rouleaux 3, c'est-à-dire la ou les roues motrices en contact avec le ou les rouleaux. Ensuite, le véhicule 80 essayé est maintenu en position typiquement par des câbles reliant le véhicule 80 au châssis routier 10 comme illustré par la figure 2b.

Le ventilateur 25 permet à la fois de refroidir et d'alimenter en air le moteur du véhicule 80 essayé lors des essais où il est sollicité et de simuler la circulation d'air autour du véhicule 80 essayé. En outre, la vitesse de l'air expulsé par le ventilateur 25 peut varier en fonction de la vitesse de rotation de l'au moins un rouleau R1.

De même il est nécessaire d'évacuer les gaz d'échappement en-dehors du dispositif d'essais 1, lorsque le véhicule 80 essayé est muni d'un moteur à combustion interne. En effet ces gaz peuvent d'une part incommoder ou même intoxiquer le ou les opérateurs et d'autre part polluer l'air intérieur du banc d'essais 2 et donc l'air consommé par le moteur du véhicule 80 essayé et finalement fausser les résultats des essais par une mauvaise combustion du moteur du véhicule 80 essayé. Un système d'extraction 20 à débit constant, dont l'admission est reliée à la fois au système d'échappement du véhicule 80 et à l'air extérieur, refoule ces gaz d'échappement. Pour cela des tuyaux relient la sortie d'échappement du véhicule 80 essayé à l'air extérieur, avant l'introduction du mélange ainsi constitué dans l'admission du ventilateur extracteur 20 à débit constant. Cet ajout d'air extérieur permet de refroidir les gaz d'échappement dans le but de préserver le ventilateur extracteur 20 de dommage causé par la chaleur. Le système d'extraction 20 est dimensionné pour que le mélange de gaz d'échappement et d'air extérieur ne dépasse pas une température maximale déterminée même lorsque le moteur à combustion interne du véhicule 80 essayé est sollicité à pleine charge. En outre, lorsque le moteur fonctionne sous faible charge, l'ajout d'air extérieur à l'admission de l'extracteur évite de mettre la sortie du moteur sous dépression.

Un autre aspect avantageux de la présente invention est aussi de pouvoir simuler différentes conditions climatiques à l'intérieur du banc d'essais 2. Un système climatique 30 composé de plusieurs éléments répartis dans tout le dispositif d'essais 1 permet de créer à l'intérieur du banc d'essais 2 des conditions diverses telles que par exemple des conditions dîtes froides (jusqu'à -30°C) ou dîtes chaudes (jusqu'à +60°C) et différents degrés d'hygrométrie. Ce système climatique 30 comporte donc par exemple un groupe d'eau glacée 31, une centrale de traitement d'air 32, un condenseur 33, un compresseur 34 et un évaporateur 35. Selon le mode de réalisation représenté aux figures 2a et 2b, l'évaporateur 35 est placé au plafond du banc d'essais 2, le groupe d'eau glacée 31 et la centrale de traitement d'air 32 sont placés au niveau d'une zone de pilotage du dispositif d'essais 1 et enfin le condenseur 33 et le compresseur 34 sont placés dans une zone attenante à la zone de pilotage dans le dispositif d'essais 1. Afin de faciliter l'établissement de conditions climatiques particulières telle qu'une température très différente de celle extérieure, il est prévu d'isoler thermiquement le dispositif d'essais 1, en particulier sa carrosserie 100.

Pour conduire et contrôler les essais réalisés dans le banc d'essais 2, une zone de pilotage 50, attenante au banc d'essais 2, est allouée pour le ou les opérateurs d'essais. Un moyen d'accès, typiquement une porte de taille standard, est spécifiquement prévu à travers une paroi latérale de la carrosserie 100 au niveau de la zone de pilotage 50. Un escalier rétractable dans le châssis routier 10 et aligné ou non avec la porte est également prévu.

Selon une forme particulière de la présente invention, la carrosserie 100 comprend au moins un tiroir 40 pouvant coulisser d'un des côtés du dispositif d'essais 1. De manière préférentielle un tiroir coulissant 40 est prévu de chaque côté du dispositif d'essais 1 permettant à la fois d'augmenter la largeur, le volume intérieur et la superficie du plancher 9 de la surface porteuse. Cela facilite les déplacements du ou des opérateurs autour du véhicule 80 essayé sans que la carrosserie 100 dépasse la largeur maximale autorisée sur route, en général 2,5 mètres, lorsque les tiroirs 40 sont en position escamotée.

Il est de préférence prévu un système de mise à niveau du dispositif d'essais 1 afin de le stabiliser. Des vérins de stabilisation peuvent se placer à différents endroits sous le châssis routier 10.

Le banc à rouleaux 3 comprend également des moyens dynamiques 4 agencés pour transmettre à l'ensemble formé par le premier rouleau R1 et, lorsqu'il est accouplé au premier rouleau R1 grâce à un moyen d'accouplement amovible 41, au deuxième rouleau R2, un couple simulant au moins en partie la réaction de la route pour le véhicule 80 essayé. Les deux rouleaux R1 et R2 sont coaxiaux et, lorsque les moyens d'accouplement 41 sont à l'état accouplé, solidaires l'un de l'autre. Les rouleaux R1 et R2 sont inertiels et sont dimensionnés pour représenter l'inertie d'un véhicule 80 ayant une masse déterminée, par exemple d'environ 1200 kg. Chaque rouleau présente une surface de roulement ayant un diamètre de 50 centimètres, plus généralement compris entre 40 centimètres et 100 centimètres. Ces diamètres, plus faibles que ceux des rouleaux traditionnels dans ce type d'application, sont choisis de manière avantageuse en vue de limiter la hauteur du plancher 9 au-dessus du sol sur lequel reposent les roues 11, pour faciliter l'accès et en même temps préserver une hauteur sous plafond à l'intérieur du dispositif d'essais 1 permettant d'accueillir tous les types de véhicules tels que par exemple les véhicules dits « véhicules particuliers » par exemple des véhicules ayant une hauteur supérieure à 1,5 mètre et pouvant aller jusqu'à 2 mètres.

De préférence, un des deux rouleaux R1 ou R2 présente une plus grande longueur longitudinale que l'autre rouleau pour exploiter au mieux la largeur disponible au sein du châssis routier 10 ajouré spécialement pour l'implantation du banc à rouleaux 3.

Des moyens de mise en position du véhicule 80 essayé sont également prévus de part et d'autre de chaque rouleau suivant un axe longitudinal des rouleaux.

Les moyens dynamiques 4 comprennent une machine électrique M munie d'un arbre rotatif de puissance et une machine de charge F munie d'un arbre rotatif de freinage. Dans les exemples représentés, la machine de charge est un frein à courants de Foucault. Selon le mode réalisation illustré par la figure 3, l'arbre rotatif de puissance de la machine électrique M est coaxial avec l'arbre rotatif de freinage du frein à courants de Foucault F mais ces deux arbres ne sont pas coaxiaux avec les rouleaux R1 ou R2.

Des moyens de transmission de couple sont prévus entre l'arbre de puissance de la machine électrique M et le rouleau R1. De même, des moyens de transmission de freinage sont prévus entre l'arbre rotatif du frein à courants de Foucault F et le rouleau R1. Dans l'exemple représenté, les arbres de puissance et de freinage sont solidaires l'un de l'autre et un unique moyen de transmission T, typiquement une courroie crantée, sert à la fois de moyen de transmission de couple et de moyen de transmission (de couple) de freinage. Ces moyens de transmission T peuvent être par exemple des chaînes, des courroies, des engrenages ou d'autres systèmes de transmission de puissance connus de l'homme du métier.

Des moyens de commande peuvent être actionnés pour faire fonctionner la machine électrique M et également le frein à courants de Foucault F. Ils permettent d'ailleurs de faire fonctionner simultanément la machine électrique M, en mode générateur ou en mode moteur, avec le frein à courants de Foucault F. Les moyens de commande comprennent par exemple au moins un variateur de vitesse quatre quadrants.

Au cours des essais, il est nécessaire d'appliquer aux rouleaux R1 ou R2 des couples variant très rapidement et de manière très précise. L'utilisation du frein à courants de Foucault F permet d'appliquer des couples de freinage très importants mais a pour inconvénients une rapidité d'évolution de freinage perfectible et une impossibilité d'appliquer des couples d'entraînement. L'utilisation de la machine électrique M (en mode générateur ou en mode moteur) permet d'une part de compenser les inconvénients cités au-dessus par une précision et une rapidité importante des couples appliqués et d'autre part de pouvoir appliquer des couples d'entraînement ou des couples de freinage afin d'ajuster le couple exercé sur les rouleaux. Par contre l'amplitude des couples appliqués est limitée. Ainsi, les deux systèmes réunis permettent d'ajuster, de manière rapide et précise, le couple exercé sur les rouleaux R1 ou R2 simulant la réaction de la route suivant différentes configurations (par exemple montée, descente, etc..) et différents cas de fonctionnement (par exemple vitesse constante, accélération, freinage, frein moteur, inversion accélération-freinage ou freinage-accélération, etc...) et suivant la masse du véhicule 80 essayé (les rouleaux R1 ou R2 étant dimensionnés pour représenter l'inertie d'un véhicule 80 de masse environ égale à 1200 kg).

Selon encore un autre aspect de l'invention, lorsque la machine électrique M fonctionne en mode générateur, elle peut en même temps fournir de l'électricité à un réseau électrique extérieur au dispositif d'essais 1 et / ou au réseau électrique du dispositif d'essais 1.

Pour éviter toute surchauffe des moyens dynamiques 4, une ventilation forcée est prévue au niveau de la machine électrique M et du frein à courants de Foucault F.

La machine électrique M et le frein à courants de Foucault F sont chacun associés à un capteur respectif Cm ou Cf mesurant le couple qu'ils transmettent respectivement à l'arbre des rouleaux R1, R2 via les moyens de transmission T.

Les moyens de commande comprennent une unité de calcul qui peut calculer la somme de ces deux couples, calculer le couple inertiel des rouleaux R1 et R2 en fonction de leur accélération, connaître aussi le couple de réaction total appliqué aux roues motrices du véhicule 80. Par ailleurs, l'unité de calcul peut déterminer le couple de réaction qu'exercerait en réalité la route à l'accélération positive ou négative du véhicule et le couple à ajouter pour simuler les autres résistances ou aides à l'avancement, telles que résistance de l'air, poids du véhicule, etc... et en tirer une valeur de consigne représentative de la condition de fonctionnement à simuler, à chaque instant. En comparant la valeur de couple réelle à la consigne, l'unité de calcul effectue des corrections rapides à l'aide de la machine électrique M et des corrections lentes à l'aide du frein à courants de Foucault F, dans le sens d'un soulagement de la machine électrique M, lorsque la machine électrique M se rapproche de ses conditions de puissance maximale, en mode générateur ou en mode moteur.

Les figures 4a, 4b, 4c et 4d présentent des courbes illustrant le fonctionnement de la machine électrique M et du frein à courants de Foucault F pour trois véhicules 80 de masse différente (1200 kg, 1800 kg et 800 kg) et lors d'un cas de fonctionnement particulier : une phase d'accélération simulée sur un sol plat ; la figure 4a illustre les courbes de consigne de couple globale à appliquer sur les rouleaux R1 ou R2 dans les trois cas ; la figure 4b présente les courbes illustrant le fonctionnement de la machine électrique M et du frein à courants de Foucault F en phase d'accélération pour un véhicule 80 essayé dont la masse est de 1200 kg alors que la figure 4c couvre le cas d'un véhicule 80 essayé de 1800 kg et la figure 4d couvre le cas d'un véhicule 80 essayé de 800 kg.

La figure 4a illustre trois courbes de consigne de couple globale C à appliquer sur les rouleaux R1 ou R2 lors d'une phase d'accélération simulée à partir d'une vitesse nulle sur un sol plat pour trois véhicules 80 de masse différente (1200 kg, 1800 kg et 800 kg) en fonction du temps T exprimé en secondes. De plus, il est également illustré l'évolution de la vitesse V au cours de cet essai d'accélération. Dans le cas où le véhicule 80 présente une masse supérieure ou égale à 1200 kg, la consigne de couple global correspond à un couple de freinage (couple positif) ; alors que dans le cas d'un véhicule 80 de masse égale à 800 kg, et jusqu'aux 8 premières secondes, la consigne de couple global correspond à un couple d'entraînement (couple négatif). Une fois la vitesse linéaire atteinte (80 km/h), la consigne de couple global correspond à un couple de freinage simulant la résistance à l'avancement, notamment la résistance aérodynamique qui serait subie par le véhicule 80 s'il se déplaçait effectivement à cette vitesse. La forme en dents de scie de la consigne de couple au début de processus correspond aux rapports de transmission successifs dans le véhicule 80.

La figure 4b illustre le cas où le véhicule 80 essayé présente une masse de 1200 kg. On distingue que seule la machine électrique M applique un couple moteur sur les rouleaux R1 ou R2 (courbe CMmes). Comme il a été indiqué plus haut, les rouleaux R1 ou R2 sont dimensionnés pour représenter l'inertie d'un véhicule 80 ayant une masse d'environ 1200 kg si bien que l'action d'un couple de freinage sur les rouleaux R1 ou R2 simulant la résistance à l'avancement du véhicule 80 essayé est nécessaire ; donc un couple plutôt faible. La machine électrique M est donc employée à cette tâche.

La figure 4c illustre le cas où le véhicule 80 essayé présente une masse de 1800 kg. On distingue que la machine électrique M (courbe CMmes) fonctionne en frein simultanément avec le frein à courants de Foucault F (courbe de consigne du couple CFcons et courbe de la mesure du couple CFmes) en vue d'appliquer le couple nécessaire sur les rouleaux (courbe Ctot_mes). Dans ce cas, il est nécessaire d'appliquer un couple global plus important que dans le cas précédent pour à la fois simuler la résistance à l'avancement et simuler l'inertie d'un véhicule 80 d'une masse de 1800 kg (les rouleaux R1 ou R2 à eux seuls ne font que simuler l'inertie d'un véhicule 80 de masse égale à environ 1200 kg). Dans ce cas, le frein à courants de Foucault F est employé. De plus la différence entre la consigne CFcons et la mesure CFmes de couple du frein à courants de Foucault F fait apparaître son manque de rapidité et de précision. Aussi la machine électrique M, en mode générateur, permet de compenser astucieusement les inconvénients liés au frein à courants de Foucault F.

La figure 4d illustre le cas où le véhicule 80 essayé présente une masse de 800 kg. On distingue que la machine électrique M agit seule, dans un premier temps pour appliquer un couple moteur aux rouleaux R1 ou R2 (courbe CMmes) de façon à aider les roues motrices du véhicules à accélérer les rouleaux R1 ou R2, surdimensionnés avec un véhicule de 800 kg pendant la phase d'accélération. Ensuite, la machine électrique M applique un léger couple de freinage pendant la phase de vitesse stabilisée pour simuler la résistance de l'air.

D'autres cas peuvent évidemment être simulés, c'est-à-dire toutes les configurations de routes combinées avec les différents modes de fonctionnement des moteurs des véhicules 80 essayés.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

Par exemple, l'arbre rotatif de puissance de la machine électrique M pourrait ne pas être coaxial avec l'arbre rotatif de freinage du frein à courants de Foucault F, ces deux arbres n'étant pas non plus coaxiaux avec les rouleaux R1 ou R2.

## Revendications

1. Dispositif d'essais (1) pour véhicule à moteur, comprenant un banc à rouleaux (3) comprenant :
▪ au moins un premier rouleau (R1) rotatif sur lui-même, en liaison pivot avec un châssis (10) relié au dispositif d'essais (1), agencé pour que sa périphérie soit en contact d'adhérence avec le pourtour d'au moins une roue motrice du véhicule (80),
▪ des moyens dynamiques (4) agencés pour transmettre à l'au moins un premier rouleau (R1) un couple simulant au moins en partie la réaction de la route pour le véhicule (80) essayé, les moyens dynamiques (4) comprenant une machine électrique (M) apte à fonctionner sélectivement en mode générateur et en mode moteur, et
▪ une machine de charge notamment un frein à courants de Foucault (F) comprenant un arbre rotatif par rapport au châssis (10),
**caractérisé en ce qu'**il comporte des moyens de commande qui peuvent être actionnés pour faire fonctionner sélectivement
- simultanément la machine de charge (F) avec la machine électrique (M) en mode générateur ou
- simultanément la machine de charge (F) avec la machine électrique (M) en mode moteur.

2. Dispositif d'essais (1) selon la revendication 1, dans lequel l'au moins un premier rouleau (R1) est inertiel.

3. Dispositif d'essais (1) selon la revendication 1 ou 2, dans lequel les moyens de commande font fonctionner la machine électrique (M) pour compenser les temps de réponse et/ou le manque de précision de la machine de charge (F).

4. Dispositif d'essais (1) selon l'une des revendications 1 à 3, dans lequel la machine électrique (M) peut fonctionner en générateur simultanément avec la machine de charge (F) afin d'ajuster le couple exercé sur l'au moins un premier rouleau (R1) simulant la réaction de la route et/ou l'inertie des rouleaux suivant la masse du véhicule.

5. Dispositif d'essais (1) selon l'une des revendications 1 à 4, dans lequel des moyens de raccordement sont prévus pour fournir à un réseau électrique extérieur et/ou à un réseau électrique du dispositif d'essais (1), l'électricité produite par la machine électrique (M) fonctionnant en générateur.

6. Dispositif d'essais (1) selon l'une des revendications 1 à 5, **caractérisé en ce qu'**une partie au moins des moyens dynamiques n'est pas coaxiale avec l'au moins un premier rouleau (R1), et il est prévu des moyens de transmission entre les moyens dynamiques et le premier rouleau (R1).

7. Dispositif d'essais (1) selon l'une des revendications 1 à 5, dans lequel la machine électrique (M) et la machine de charge notamment un frein à courants de Foucault (F) sont coaxiales entre eux selon un axe différent de celui du premier rouleau (R1) et reliées à ce dernier par des moyens de transmission (T) communs.

8. Dispositif d'essais (1) selon l'une quelconque des revendications précédentes, dans lequel le dispositif d'essais (1) est fermé et comprend une surface porteuse pour le véhicule et dans lequel le dispositif (1) comprend un châssis routier (10), monté sur roues (11), et supportant le banc d'essais (2) ainsi qu'un plancher (9) définissant la surface porteuse, et une carrosserie (100) portée par le châssis routier (10) pour conférer au dispositif d'essais (1) son caractère fermé.

9. Dispositif d'essais (1) selon la revendication 8, dans lequel les moyens dynamiques (4) sont reliés à l'au moins un premier rouleau (R1) par des moyens de transmission et sont disposés pour avoir au plus sensiblement la même emprise transversale que l'emplacement prévu pour le véhicule dans la largeur du châssis routier (10).

10. Dispositif d'essais (1) selon la revendication 8 ou 9, dans lequel le banc d'essais (2) comprend un système d'extraction (20) des gaz d'échappement dont l'admission est reliée à la fois au système d'échappement du véhicule et à l'air extérieur.

11. Dispositif d'essais (1) selon l'une des revendications 8 à 10, dans lequel la carrosserie (100) et le plancher (9) sont extensibles en largeur par au moins un tiroir coulissant (40).

12. Dispositif d'essais (1) selon l'une des revendications 1 à 11, dans lequel le banc à rouleaux (3) comporte, en outre :
▪ un deuxième rouleau (R2) rotatif sur lui-même, agencé pour que sa périphérie soit en contact d'adhérence avec le pourtour d'au moins une roue motrice du véhicule, et
▪ des moyens d'accouplement amovibles configurés pour accoupler de manière amovible le deuxième rouleau au premier rouleau (R1).

13. Dispositif d'essais (1) selon la revendication 12, dans lequel le premier rouleau et le deuxième rouleau (R1, R2) ont des moments d'inertie différents.

14. Dispositif d'essais (1) selon la revendication 12 ou 13, dans lequel les moyens dynamiques sont accouplés au premier rouleau (R1) sans que le deuxième rouleau (R2) soit un moyen de transmission entre les moyens dynamiques et le premier rouleau (R1).

15. Dispositif d'essais (1) selon l'une des revendications 1 à 14, dans lequel chaque rouleau présente une surface de roulement ayant un diamètre compris entre 40 centimètres et 100 centimètres.

16. Dispositif d'essais (1) selon l'une des revendications 1 à 15, dans lequel un système climatique (30) permet de simuler diverses conditions climatiques à l'intérieur du dispositif d'essais (1).

17. Dispositif d'essais (1) selon l'une des revendications 1 à 16, où le dispositif d'essais (1) est isolé thermiquement.

## Patentansprüche

1. Prüfvorrichtung (1) für Motorfahrzeuge, mit einem Rollenprüfstand (3), der das Folgende enthält:
• zumindest eine erste Rolle (R1), die um sich selbst drehbar ist, mit einem mit der Prüfvorrichtung (1) verbundenen Fahrgestell (10) in Gelenkverbindung steht und so angeordnet ist, dass ihr Umfang in Haftkontakt mit dem Umfang zumindest eines Antriebsrads des Fahrzeugs (80) ist,
• dynamische Einrichtungen (4), die dazu angeordnet sind, auf die zumindest eine erste Rolle (R1) ein Moment zu übertragen, das zumindest teilweise die Reaktion der Straße für das Prüffahrzeug (80) simuliert, wobei die dynamischen Einrichtungen (4) eine elektrische Maschine (M) enthalten, die dazu ausgebildet ist, selektiv im Generatormodus und im Motormodus betrieben zu werden, und
• eine Lastmaschine, insbesondere eine Wirbelstrombremse (F) mit einer bezüglich des Fahrgestells (10) drehbaren Welle,
**dadurch gekennzeichnet, dass** sie Steuereinrichtungen enthält, die betätigt werden können, um selektiv
- gleichzeitig die Lastmaschine (F) mit der elektrischen Maschine (M) im Generatormodus oder
- gleichzeitig die Lastmaschine (F) mit der elektrischen Maschine (M) im Motormodus
zu betreiben.

2. Prüfvorrichtung (1) nach Anspruch 1, wobei die zumindest eine erste Rolle (R1) eine Trägheitsrolle ist.

3. Prüfvorrichtung (1) nach Anspruch 1 oder 2, wobei die Steuereinrichtungen die elektrische Maschine (M) so betreiben, dass sie die Ansprechzeiten und/oder die Ungenauigkeit der Lastmaschine (F) ausgleicht.

4. Prüfvorrichtung (1) nach einem der Ansprüche 1 bis 3, wobei die elektrische Maschine (M) als Generator gleichzeitig mit der Lastmaschine (F) betrieben werden kann, um das auf die zumindest eine erste Rolle (R1) ausgeübte Moment, welches die Reaktion der Straße simuliert und/oder die Trägheit der Rollen je nach Masse des Fahrzeugs einzustellen.

5. Prüfvorrichtung (1) nach einem der Ansprüche 1 bis 4, wobei Anschlusseinrichtungen vorhanden sind, um einem externen Stromnetz und/oder einem Stromnetz der Prüfvorrichtung (1) den von der als Generator betriebenen elektrischen Maschine (M) erzeugten Strom bereitzustellen.

6. Prüfvorrichtung (1) nach einem der Ansprüche 1 bis 5, **dadurch gekennzeichnet, dass** zumindest ein Teil der dynamischen Einrichtungen nicht koaxial mit der zumindest einen ersten Rolle (R1) verläuft und Übertragungseinrichtungen zwischen den dynamischen Einrichtungen und der ersten Rolle (R1) vorgesehen sind.

7. Prüfvorrichtung (1) nach einem der Ansprüche 1 bis 5, wobei die elektrische Maschine (M) und die Lastmaschine, insbesondere eine Wirbelstrombremse (F), entlang einer Achse, die sich von der der ersten Rolle (R1) unterscheidet, koaxial zueinander verlaufen und mit letzterer über gemeinsame Übertragungseinrichtungen (T) verbunden sind.

8. Prüfvorrichtung (1) nach einem der vorangehenden Ansprüche, wobei die Prüfvorrichtung (1) geschlossen ist und eine Aufstandsfläche für das Fahrzeug aufweist und wobei die Vorrichtung (1) ein Straßenfahrgestell (10) enthält, das auf Rädern (11) gelagert ist und den Prüfstand (2) und einen die Aufstandsfläche definierenden Boden (9) trägt, sowie eine von dem Straßenfahrgestell (10) getragene Karosserie (100), um der Prüfvorrichtung (1) ihre geschlossene Erscheinung zu verleihen.

9. Prüfvorrichtung (1) nach Anspruch 8, wobei die dynamischen Einrichtungen (4) mit der zumindest einen ersten Rolle (R1) über Übertragungseinrichtungen verbunden sind und dazu angeordnet sind, um in der Breite des Straßenfahrgestells (10) höchstens im Wesentlichen die gleiche Querausladung wie die für das Fahrzeug vorgesehene Stelle zu haben.

10. Prüfvorrichtung (1) nach Anspruch 8 oder 9, wobei der Prüfstand (2) ein Abgasableitsystem (20) zum Ableiten von Abgasen enthält, dessen Einlass zugleich mit dem Abgassystem des Fahrzeugs und mit der Außenluft verbunden ist.

11. Prüfvorrichtung (1) nach einem der Ansprüche 8 bis 10, wobei die Karosserie (100) und der Boden (9) über zumindest eine Schublade (40) in der Breite erweiterbar sind.

12. Prüfvorrichtung (1) nach einem der Ansprüche 1 bis 11, wobei der Rollenprüfstand (3) ferner enthält:
• eine zweite Rolle (R2), die um sich selbst drehbar und so angeordnet ist, dass ihr Umfang in Haftkontakt mit dem Umfang zumindest eines Antriebsrads des Fahrzeugs ist, und
• lösbare Kopplungseinrichtungen, die dazu ausgelegt sind, die zweite Rolle lösbar mit der ersten Rolle (R1) zu koppeln.

13. Prüfvorrichtung (1) nach Anspruch 12, wobei die erste Rolle und die zweite Rolle (R1, R2) unterschiedliche Trägheitsmomente haben.

14. Prüfvorrichtung (1) nach Anspruch 12 oder 13, wobei die dynamischen Einrichtungen mit der erste Rolle (R1) gekoppelt sind, ohne dass die zweite Rolle (R2) eine Übertragungseinrichtungen zwischen den dynamischen Einrichtungen und der ersten Rolle (R1) darstellt.

15. Prüfvorrichtung (1) nach einem der Ansprüche 1 bis 14, wobei jede Rolle eine Lauffläche mit einem Durchmesser zwischen 40 cm und 100 cm aufweist.

16. Prüfvorrichtung (1) nach einem der Ansprüche 1 bis 15, wobei ein Klimasystem (30) gestattet, verschiedene Klimabedingungen innerhalb der Prüfvorrichtung (1) zu simulieren.

17. Prüfvorrichtung (1) nach einem der Ansprüche 1 bis 16, wobei die Prüfvorrichtung (1) wärmeisoliert ist.

## Claims

1. Testing device (1) for a motor vehicle, comprising a chassis dynamometer (3) comprising:
▪ at least one first roller (R1) rotating on itself, pivotably connected with a chassis (10) connected to the testing device (1), arranged so that its periphery is in frictional contact with the circumference of at least one driving wheel of the vehicle (80),
▪ dynamic means (4) arranged in order to transmit a torque to the at least one first roller (R1) at least partially simulating the reaction of the road for the tested vehicle (80), the dynamic means (4) comprising an electric machine (M) capable of operating selectively in generator mode and in motor mode, and
▪ a loading machine, in particular a Foucault current brake (F) comprising a shaft that is rotary with respect to the chassis (10),
**characterized in that** it comprises control means that can be actuated in order to operate selectively
- the loading machine (F) simultaneously with the electric machine (M) in generator mode or
- the loading machine (F) simultaneously with the electric machine (M) in motor mode.

2. Testing device (1) according to claim 1, in which the at least one first roller (R1) is inertial.

3. Testing device (1) according to claim 1 or 2, in which the control means operate the electric machine (M) in order to compensate for the response times and/or the lack of accuracy of the loading machine (F).

4. Testing device (1) according to one of claims 1 to 3, in which the electric machine (M) can operate as a generator simultaneously with the loading machine (F) in order to adjust the torque exerted on the at least one first roller (R1) simulating the reaction of the road and/or the inertia of the rollers according to the weight of the vehicle.

5. Testing device (1) according to one of claims 1 to 4, in which provision is made for connection means for supplying the electricity produced by the electrical machine (M) operating as a generator to an external power network and/or to an electrical network of the testing device (1).

6. Testing device (1) according to one of claims 1 to 5, **characterized in that** at least part of the dynamic means is not coaxial with the at least one first roller (R1), and provision is made for transmission means between the dynamic means and the first roller (R1).

7. Testing device (1) according to one of claims 1 to 5, in which the electric machine (M) and the loading machine, in particular a Foucault current brake (F), are coaxial with one another along an axis different from that of the first roller (R1) and connected thereto by common transmission means (T).

8. Testing device (1) according to any one of the preceding claims, in which the testing device (1) is enclosed and comprises a bearing surface for the vehicle, and in which the device (1) comprises a road chassis (10), mounted on wheels (11), and supporting the test rig (2) as well as a floor (9) defining the bearing surface, and a body (100) borne by the road chassis (10) in order to give the testing device (1) its enclosed character.

9. Testing device (1) according to claim 8, in which the dynamic means (4) are connected to the at least one first roller (R1) by transmission means and are positioned so that they have at most substantially the same transverse footprint as the space provided for the vehicle within the width of the road chassis (10).

10. Testing device (1) according to claim 8 or 9, in which the test rig (2) comprises a system (20) for the extraction of the exhaust gases, the intake of which is connected both to the exhaust system of the vehicle and to the air outside.

11. Testing device (1) according to one of claims 8 to 10, in which the body (100) and the floor (9) can be extended widthwardly by at least one sliding tray (40).

12. Testing device (1) according to one of claims 1 to 11, in which the chassis dynamometer (3) moreover comprises:
▪ a second roller (R2) rotating on itself, arranged so that its periphery is in frictional contact with the circumference of at least one driving wheel of the vehicle, and
▪ detachable coupling means configured in order to couple the second roller detachably to the first roller (R1).

13. Testing device (1) according to claim 12, in which the first roller and the second roller (R1, R2) have different moments of inertia.

14. Testing device (1) according to claim 12 or 13, in which the dynamic means are coupled to the first roller (R1) without the second roller (R2) being a means of transmission between the dynamic means and the first roller (R1).

15. Testing device (1) according to one of claims 1 to 14, in which each roller has a running surface having a diameter comprised between 40 centimetres and 100 centimetres.

16. Testing device (1) according to one of claims 1 to 15, in which a climate system (30) makes it possible to simulate various climatic conditions inside the testing device (1).

17. Testing device (1) according to one of claims 1 to 16, in which the testing device (1) is thermally insulated.
